## Europäisches Patentamt
## European Patent Office
## Office européen des brevets

(19)

(11) Veröffentlichungsnummer: **0 001 590**
**B1**

(12) **EUROPÄISCHE PATENTSCHRIFT**

(45) Veröffentlichungstag der Patentschrift: **21.10.81**

(51) Int. Cl.³: **C 08 F 6/24, C 08 F 10/00**

(21) Anmeldenummer: **78101061.6**

(22) Anmeldetag: **04.10.78**

(54) Verfahren zur kontinuierlichen Entfernung von Restkohlenwasserstoffen aus Polyolefinen.

(30) Priorität: **19.10.77 DE 2746909**

(43) Veröffentlichungstag der Anmeldung:
**02.05.79 Patentblatt 79/9**

(45) Bekanntmachung des Hinweises auf die Patenterteilung:
**21.10.81 Patentblatt 81/42**

(84) Benannte Vertragsstaaten:
**DE FR GB**

(56) Entgegenhaltungen:
**DE - A - 2 521 780**
**DE - A - 2 550 023**
**DE - A - 2 640 546**

(73) Patentinhaber: **HOECHST AKTIENGESELLSCHAFT**
**Postfach 80 03 20**
**D-6230 Frankfurt/Main 80 (DE)**

(72) Erfinder: **Kaiser, Karl, Dr.**
**Hubert-Geuer-Strasse 71**
**D-5040 Brühl (DE)**
Erfinder: **Ohorodnik, Alexander, Dr.**
**Kastanienweg 24**
**D-5042 Erftstadt (DE)**

# 0 001 590

Verfahren zur kontinuierlichen Entfernung von Restkohlenwasserstoffen aus Polyolefinen

Es ist bekannt, $\alpha$-Olefine sowie deren Mischungen nach dem Niederdruckverfahren von Ziegler mittels Katalysatoren, die Verbindungen der Elemente der IV. bis VI. Nebengruppe des Periodensystems in Kombination mit metallorganischen Verbindungen der Elemente der I. bis III. Gruppe des Periodensystems enthalten, in gesättigten, flüssigen Kohlenwasserstoffen mit 6—11 C-Atomen oder entsprechenden Gemischen, wie z. B. Benzin, zu polymerisieren. Im weiteren Aufarbeitungsverlauf des Polymerisates werden die im Benzin suspendierten Polyolefine durch Filtration in Filterpressen vom Dispergiermittel abgetrennt. Die benzinfeuchten Polymerisate können dann auf verschiedene Art und Weise vom noch anhaftenden Dispergiermittel befreit werden, beispielsweise durch unmittelbare Trocknung im Kontakttrockner oder mit heißer Luft bzw. mit Inertgasen oder gemäß DE—AS 1 089 547 durch intensive Wasserdampfdestillation.

In der Betriebspraxis hat es sich aus verschiedenen Gründen als zweckmäßig erwiesen, die noch benzinhaltigen Polymerisate in Wasser zu dispergieren und das Benzin aus der wässerigen Phase unter Rühren in Form von azeotropen Gemischen mit Wasser abzudestillieren. Diese Arbeitsweise ist aufgrund des relativ hohen Energieverbrauchs für die Destillation des Restbenzins als nachteilig zu betrachten. Außerdem erfordert die azeotrope Destillation des Benzins mit Wasser aufgrund der Bildung unterschiedlicher azeotroper Gemische eine besondere Ausgestaltung der Destillationskolonne im Hinblick auf die erwünschte Trennwirkung.

Es ist außerdem nach der DE—OS 2 521 780 eine Verfahren zur Entfernung von Monomeren aus einer wässerigen Dispersion eines Polymeren, das mindestens 50 Gew% polymerisiertes Vinylchlorid enthält, bekannt, welches dadurch gekennzeichnet ist, daß man die Dispersion in den oberen Teil einer mit Siebplatten ausgestatteten Kolonne einleitet und im Gegenstrom mit etwa 100° bis 150°C heißem Wasserdampf unter einem Druck von o,8—1,6 bar während etwa 10 Sekunden bis 20 Minuten abzieht, wonach man die Polymerdispersion am Boden der Kolonne abzieht, während das über Kopf der Kolonne abströmende Dampfgemisch zur Gewinnung einer wässerigen Phase sowie der Monomeren stufenweise kondensiert wird.

Vorbeschriebene Arbeitsweise ist zur Entfernung von Restkohlenwasserstoffen aus Polyolefinen aus folgenden Gründen nicht geeignet:

Polyvinylchlorid mit einer Dichte von mehr als 1,4 is im Gegensatz zu den Polyolefinen schwerer als Wasser, so daß sich das als wässerige Dispersion am Kolonnenkopf aufgegebene Polyvinylchlorid in der Kolonne im Gegenstrom zum aufsteigenden Dampf von oben nach unten bewegt. Demgegenüber gehorchen die in Bezug auf Wasser spezifisch leichteren Polyolefine dem Strömungsprinzip des Polyvinylchlorids nicht, indem sie auf der Wasseroberfläche schwimmen und somit in einer Kolonne nicht von oben nach unten ablaufen. Außerdem ist das nach dem Verfahren der DE—OS 2 521 780 zu entfernende Vinylchlorid unter Normalbedingungen gasförmig, während die aus Polyolefinen zu entfernenden Restkohlenwasserstoffe mit einem Siedebereich von 60—190° C flüssig sind. Ferner ist zu berücksichtigen, daß das Vinylchlorid in der wässerigen PVC-Dispersion nur in ppm-Mengen vorliegt und deshalb die Beschaffenheit der Dispersion nicht beeinflußt. Hingegen enthalten die Polyolefindispersionen nach der Erfindung erheblich größere Mengen an abzutrennenden Produkten, die einerseits die Grenzflächenaktivität der Dispersion beträchtlich verändern und andererseits mit dem Dispergiermittel Azeotrope bilden, so daß bei der Benzinentfernung neben dem Diffusionsproblem noch zusätzliche Destillationsschwierigkeiten, die Feststoffabscheidungen oder Schaumbildung, zu bewältigen sind.

Es wurde nunmehr überraschend gefunden, daß man die bei der destillativen Entfernung von Restkohlenwasserstoffen aus in Wasser suspendierten Polyolefinen auftretenden Schwierigkeiten überwinden kann, wenn man die Oberflächenspannung der wässerigen Phase der Dispersion vermindert und die Destillation unter bestimmten Bedingungen ausführt.

Gegenstand der Erfindung ist somit ein Verfahren zur Entfernung von gesättigten flüssigen Restkohlenwasserstoffen mit mindestens 5 C-Atomen im Molekül oder deren Gemischen aus Polyolefinen, die durch katalytische $\alpha$-Olefinpolymerisation in Gegenwart von an sich bekannten Katalysatormischungen aus Schwermetallverbindungen und metallorganischen Verbindungen erhalten wurden, mittels Dampf und Wasser, wobei der Restkohlenwasserstoffgehalt im Polyolefin 10—50 Gew% beträgt, welches dadurch gekennzeichnet ist, daß man

a) das kohlenwasserstoffhaltige Polyolefin in eine wässerige emulgatorhaltige Lösung, deren Oberflächenspannung bei 20°C gegen Luft 50—68 mN/m beträgt, einträgt und das Gemisch durch Rühren in eine homogene Dispersion überführt, wobei der Anteil des Polyolefins in der wässerigen Dispersion 10—40 Gew% beträgt; daß man

b) die Dispersion in den oberen Teil einer mit mindestens 5 Siebböden ausgestatteten Kolonne einleitet und im Gegenstrom mit 90 bis 120°C heißem Wasserdampf behandelt, wobei der freie Querschnitt der einzelnen Siebböden in der Kolonne sich vom untersten bis zum obersten Boden von etwa 3% bis auf etwa 90% der Bodenfläche kontinuierlich erhöht und im etwa gleichen Verhältnis der Abstand der einzelnen Böden von unten nach oben zunimmt, und daß man

c) von Sumpf der Kolonne die kohlenwasserstofffreie wässerige Polyolefindispersion abzieht und das Polyolefin vom Wasser trennt, während am Kolonnenkopf ein Kohlenwasserstoff/Wasser-Azeotrop

2

bzw. Azeotropengemisch abdestilliert, das in einem Kühler kondensiert und in einem nachfolgenden Abscheider getrennt wird.

Die erfindungsgemäß von Polyolefinen, wie z. B. Polyäthylen oder Polypropylen, zu entfernenden Restkohlenwasserstoffe enthalten im allgemeinen 6—11 Kohlenstoffatome und sind im Polyolefin in einer Menge von 20 bis 50 Gew% enthalten. Insbesondere handelt es sich bei den Restkohlenwasserstoffen um Hexan bzw. im Falle von Restkohlenwasserstoffgemischen um Benzin mit einem Siederbereich von etwa 60 bis 190°C.

Es hat sich als zweckmäßig erwiesen, dem oberen Teil der Siebbodenkolonne eine gegebenenfalls vorerwärmte wässerige Polyolefindispersion zuzuführen und im Gegenstrom mit Dampf von einer Temperatur von 90 bis 120°C und unter einem Druck von 700—1600 mbar zu behandeln. Um ein Schäumen der Dispersion in der Kolonne zu vermeiden, soll die Oberflächenspannung der wässerigen, emulgatorhaltigen Lösung bei 20°C gegen Luft möglichst zwischen 61 und 68 mN/m betragen. Bewährte Emulgatoren für vorgenannten Zweck sind beispielsweise äthoxylierte Stearinsäure mit 70 Mol Äthylenoxid.

Die zur Durchführung des Verfahrens der Erfindung geeignete Siebbodenkolonne kann mit mehreren, beispielsweise 5—20, Siebböden mit oder ohne Ablaufwehre ausgestattet sein, wobei der Abstand der einzelnen Böden in der Kolonne sich von unten nach oben vergrößert, derart, daß der Abstand zwischen dem letzten und vorletzten Boden etwa 10mal so groß ist wie der Abstand zwischen den untersten beiden Böden. Verständlicherweise ist die mit Ablaufwehren versehene Siebbodenkolonne zu bevorzugen, da sie ohne Beeinträchtigung ihrer Funktion über einen breiteren Belastungsbereich verfügt.

Nach einer in der Praxis bewährten, beispielhaften Ausführungsform der Erfindung leitet man die wässerige Polyolefindispersion in einer Menge von etwa 30 bis 50 Liter/h in den oberen Teil einer mit 5 Siebböden und ohne Überlaufrohr ausgestatteten Kolonne ein, wobei die freien Querschnitte der einzelnen Böden 5%, 10%, 20%, 60% und 70% der Bodenfläche betragen und die einzelnen Böden von unten nach oben einen Abstand von 5%, 15%, 30% und 50%, bezogen auf die Gesamtlänge der Kolonne, aufweisen. Für einen reibungslosen Ablauf der Destillation ist zu beachten, daß die Temperatur am Kolonnenkopf über dem Siedepunkt des abzutrennenden Kohlenwasserstoff/Wasser-Azeotrops liegt.

Die Schwierigkeiten, die der Lösung der erfindungsgemäßen Aufgabe entgegenstanden, resultieren aus der Tatsache, daß die zum Dispergieren des Polyolefins in Wasser erforderliche Emulgatorzugabe einerseits und der destillationsbedingte, graduell von Boden zu Boden abgestufte Benzingehalt andererseits die Beschaffenheit der Dispersion, bezogen auf die Betriebsbedingungen einer Destillationskolonne, außerordentlich ungünstig beeinflussen. Bei der destillativen Trennung einer Wasser/Benzin/Polyolefin-Dispersion in einer üblichen Siebbodenkolonne mit einheitlichem freiem Querschnitt der einzelnen Siebböden sowie einheitlichem Bodenabstand bildet sich im Oberteil der Kolonne ein Dispersionsschaum, der unter den Betriebsbedingungen einer Destillation nicht nach unten in Richtung Sumpfteil abläuft, sondern sich zunächst staut und dann über den Kolonnenkopf ausgetragen wird. Die Lösung der vorliegenden Problematik wird darüber hinaus noch dadurch erschwert, daß das spezifische Gewicht der auf den verschiedenen Kolonnenböden sich bildenden Polyolefindispersionen in unübersichtlicher Weise sowohl vom Benzingehalt und der Emulgatormenge als auch von der Strömungsgeschwindigkeit in den Öffnungen der Siebböden abhängt. Da aber die obengenannten Faktoren von Boden zu Boden variieren, ist es außerordentlich schwierig, bei Anwendung bekannter Maßnahmen auf allen Böden gleichzeitig ein stabiles Betriebsgleichgewicht herzustellen, so daß über Kopf das Benzin quantitativ als Wasserazeotrop abdestilliert und das Polyolefin benzinfrei im Sumpf der Destillation anfällt.

Das Verfahren der Erfindung ist als technisch fortschrittlich zu bezeichnen, da es im Gegensatz zu der bisher praktizierten Verfahrensweise, bestehend in der Entfernung der Restkohlenwasserstoffe vom Polyolefin durch Wasserdampfdestillation, energiesparend ist und außerdem kontinuierlich durchgeführt werden kann.

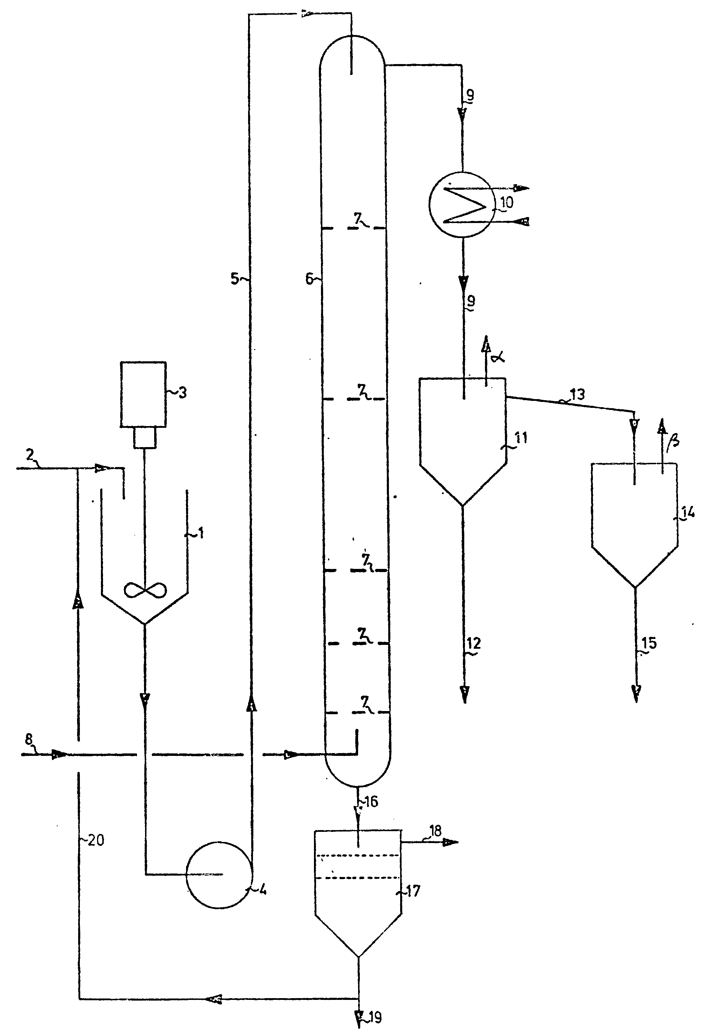

Eine beispielhafte Ausführungsform des Verfahrens der Erfindung wird im folgenden in Verbindung mit der Zeichnung näher erläutert, wobei das Verfahren auf diese Ausführungsform nicht beschränkt ist.

In das mit einer wässerigen emulgatorhaltigen Lösung beschickte Rührgefäß (1) wird über die Leitung (2) das kohlenwasserstoffhaltige Polyolefin eingebracht und die entstehende Dispersion mit dem Rührer (3) homogenisiert. Die homogenisierte Dispersion wird vom Rührgefäß (1) mittels der Pumpe (4) über die Leitung (5) in den oberen Teil der Destillationskolonne (6), welche mit in unterschiedlichem Abstand angeordneten Siebböden (7) ausgestattet ist, aufgegeben. Die vom Kopf der Kolonne (6) nach unten abfließende Dispersion wird im Gegenstrom mit heißem Wasserdampf behandelt, welcher über die Leitung (8) in die Kolonne (6) unterhalb des 1. Siebbodens eingeleitet wird. Das in der Kolonne (6) sich bildende azeotrope Gemisch aus Restkohlenwasserstoffen und Wasser wird vom Kopf der Kolonne (6) über die Leitung (9) abgezogen, im Kühler (10) kondensiert und im Abscheider (11) in zwei Schichten getrennt. Die untere, aus Wasser bestehende, Schicht wird über die Leitung (12) abgezogen, während die obere Schicht aus Restkohlenwasserstoffen über die Leitung (13) der Vorlage (14) zugeführt wird, aus welcher die Kohlenwasserstoffe über die Leitung (15) entnommen werden können.

Die Leitungen ($\alpha$) und ($\beta$) stellen Entlüftungsleitungen dar. Das gereinigte Polyolefin wird aus dem Sumpf der Kolonne (6) über die Leitung (16) in den Abscheider (17) geleitet. Nach Ausbildung zweier Schichten wird die obere Polyolefinsschicht aus dem Abscheider (17) über die Leitung (18) abgezogen, während die untere, wässerige, emulgatorhaltige Schicht entweder über die Leitung (19) entnommen oder über die Leitung (20) im Kreislauf in das Rührgefäß (1) eingeleitet wird.

Beispiel 1

Es wurde aus einem benzinfeuchten Polypropylen mit einem Benzingehalt von 40 Gew% das Benzin welches einen Siedebereich von 140 bis 190°C besaß, abgetrennt. Zu diesem Zweck wurden zunächst eine wässerige, 80°C warme emulgatorhaltige Lösung mit einem Emulgatorgehalt von 50 ppm und einer Oberflächenspannung bei 20°C gegen Luft von 65 mN/m hergestellt und anschließend in der Lösung das benzinfeuchte Polypropylen dispergiert und durch Rühren homogenisiert. Als Emulgator wurde mit 70 Mol Äthylenoxid äthoxylierte Stearinsäure verwendet. Die homogenisierte Dispersion enthielt 25 Gew% Feststoff, 8,5 Gew% Restbenzin und 66,5 Gew% Wasser. Aus Gründen des Energieverbrauchs hat es sich bei der Herstellung der Dispersion als vorteilhaft erwiesen, ein bereits emulgatorhaltiges, vorgewärmtes Wasser aus dem Abscheider (17) zu verwenden, wobei letzteres gegebenenfalls durch Zugabe von frischem Emulgator auf die erforderliche Emulgatorkonzentration eingestellt werden muß. In jedem Falle ist es empfehlenswert, vor der Destillation die Oberflächenspannung der emulgatorhaltigen, wässerigen Lösung zu überprüfen.

40—65 Liter/h der benzinhaltigen wässerigen Polypropylendispersion wurden in den oberen Teil der Siebbodenkolonne (6) eingeleitet und im Gegenstrom mit Dampf von einer Temperatur von 102°C behandelt. Die Temperatur am Kolonnenkopf betrug 99°—101°C und der Druck am untersten Siebboden 1020 mbar. Die Siebbodenkolonne (6) besaß eine Höhe von 2,2 m und einen Durchmesser von 10 cm. In der Kolonne waren 5 Siebböden angeordnet, wobei der Abstand

zwischen dem untersten 1. und 2. Boden 10 cm,

zwischen dem untersten 2. und 3. Boden 20 cm,

zwischen dem untersten 3. und 4. Boden 40 cm,

zwischen dem untersten 4. und 5. Boden 70 cm und

der freie Raum über dem 5. Boden 80 cm betrug.

Die einzelnen Siebböden waren so beschaffen, daß

der 1. Boden einen freien Querschnitt von  5%,

der 2. Boden einen freien Querschnitt von 10%,

der 3. Boden einen freien Querschnitt von 20%,

der 4. Boden einen freien Querschnitt von 60%,

der 5. Boden einen freien Querschnitt von 70%

der Bodenfläche aufwies.

Die benzinfreie, wässerige Polypropylendispersion wurde vom Sumpf der Kolonne (6) abgezogen und im Abscheider (17) getrennt. Das über Kopf der Kolonne (6) abströmende Benzin/Wasserazeotrop wurde im Kühler (10) kondensiert und im Abscheider (11) gesammelt und getrennt.

Beispiel 2

Es wurde analog Beispiel 1 verfahren, jedoch wurde der freie Querschnitt der einzelnen Siebböden, die zusätzlich mit einem Ablaufwehr ausgestattet waren, wie folgt verändert:

1. Boden (unterster) freier Querschnitt  4%

2. Boden (unterster) freier Querschnitt  4%

3. Boden (unterster) freier Querschnitt  8%

4. Boden (unterster) freier Querschnitt  8%

5. Boden (unterster) freier Querschnitt 12%

Unter den veränderten Destillationsbedingungen konnte der Durchsatz der kohlenwasserstoffhaltigen Dispersion zwischen 10 und 60 Liter/h störungsfrei variiert werden, ohne den erwünschten Trenneffekt zu vermindern.

## Beispiel 3

Es wurde analog Beispiel 2 verfahren , jedoch besaß die zum Einsatz in die Destillationskolonne bestimmte Dispersion folgende Zusammensetzung:

25 Gew% Polyäthylen

8,5 Gew% Hexan

66,5 Gew% Wasser

Der Siedepunkt des über Kopf der Kolonne abgezogenen azeotropen Gemisches betrug 62°C. Die Entfernung des Hexans von Polyäthylen war vollständig.

**Patentansprüche**

1. Verfahren zur Entfernung von gesättigten flüssigen Restkohlenwasserstoffen mit mindestens 5 C-Atomen im Molekül aus Polyolefinen, die durch katalytische $\alpha$-Olefinpolymerisation in Gegenwart von Katalysatormischungen aus Schwermetallverbindungen und metallorganischen Verbindungen erhalten wurden, mittels Dampf und Wasser, wobei der Restkohlenwasserstoffgehalt im Polyolefin 10—50 Gew% beträgt, dadurch gekennzeichnet, daß man

a) das kohlenwasserstoffhaltige Polyolefin in eine wässerige, emulgatorhaltige Lösung, deren Oberflächenspannung bei 20°C gegen Luft 50—68 mN/m beträgt, einträgt und das Gemisch durch Rühren in eine homogene Dispersion überführt, wobei der Anteil des Polyolefins in der wässerigen Dispersion 10—40 Gew% beträgt; daß man

b) die Dispersion in den oberen Teil einer mit mindestens 5 Siebböden auggestatteten Kolonne einleitet und im Gegenstrom mit 90 bis 120°C heißem Wasserdampf behandelt, wobei der freie Querschnitt der einzelnen Siebböden in der Kolonne sich vom untersten bis zum obersten Boden von etwa 3% bis auf etwa 90% der Bodenfläche kontinuierlich erhöht und im etwa gleichen Verhältnis der Abstand der einzelnen Böden von unten nach oben zunimmt, und daß man

c) vom Sumpf der Kolonne die kohlenwasserstofffreie wässerige Polyolefindispersion abzieht und das Polyolefin vom Wasser trennt, während am Kolonnenkopf ein Kohlenwasserstoff/Wasser-Azeotrop bzw. Azeotropengemisch abdestilliert, das in einem Kühler kondensiert und in einem nachfolgenden Abscheider getrennt wird.

2. Verfahren nach Anspruch 1, dadurch gekennzeichnet, daß die Restkohlenwasserstoffe 6—11 Kohlenstoffatome besitzen.

3. Verfahren nach Anspruch 1 oder 2, dadurch gekennzeichnet, daß die Restkohlenwasserstoffe Hexan oder Benzin sind.

4. Verfahren nach Anspruch 1—3, dadurch gekennzeichnet, daß man aus Polyäthylen oder Polypropylen die Restkohlenwasserstoffe entfernt.

5. Verfahren nach Anspruch 1—4, dadurch gekennzeichnet, daß der Restkohlenwasserstoffgehalt im Polyolefin 20 bis 50 Gew% beträgt.

6. Verfahren nach Anspruch 1—5, dadurch gekennzeichnet, daß die Oberflächenspannung der wässerigen, emulgatorhaltigen Lösung bei 20°C gegen Luft 61—68 mN/m beträgt.

7. Verfahren nach Anspruch 1—6, dadurch gekennzeichnet, daß man als Emulgator äthoxylierte Stearinsäure einsetzt.

8. Verfahren nach Anspruch 1—7, dadurch gekennzeichnet, daß man die wässerige Dispersion des Polyolefins im Gegenstrom mit Dampf unter einem Druck von 700—1600 mbar behandelt.

9. Verfahren nach Anspruch 1—8, dadurch gekennzeichnet, daß der Abstand der einzelnen Böden in der Kolonne sich von unten nach oben vergrößert, derart, daß der Abstand zwischen dem letzten und vorletzten Boden etwa 10mal so groß ist wie der Abstand zwischen den untersten beiden Böden.

10. Verfahren nach Anspruch 1—9, dadurch gekennzeichnet, daß man die Dispersion in den oberen Teil einer mit 5 Siebböden und ohne Überlaufrohr ausgestatteten Kolonne einleitet, wobei die freien Querschnitte der einzelnen Böden 5%, 10%, 20%, 60% und 70% der Bodenfläche betragen und die einzelnen Böden von unten nach oben einen Abstand von 5%, 15%, 30% und 50%, bezogen auf die Gesamtlänge der Kolonne, aufweisen.

11. Verfahren nach Anspruch 1—10, dadurch gekennzeichnet, daß die Temperatur am Kolonnenkopf über dem Siedepunkt des abzutrennenden Kohlenwasserstoff/Wasser-Azeotrops liegt.

12. Verfahren nach Anspruch 1—11, dadurch gekennzeichnet, daß die Zulaufmenge der Dispersion in den Kopf der Kolonne etwa 30 bis 50 l/h beträgt.

## Claims

1. Process, wherein polyolefins which are made by subjecting $\alpha$-olefins to catalytic polymerization in contact with standard catalyst mixtures of heavy metal compounds and organometal compounds, and contain about 10 to 50 weight % of saturated liquid residual hydrocarbons with at least 5 carbon atoms in the molecule, are freed from those residual hydrocarbons by means of steam and water, which comprises:

    . a) introducing the hydrocarbon-containing polyolefin into an aqueous emulsifier-containing solution having a surface tension at 20°C, with respect to air, of about 50 to 68 mN/m; stirring the resulting mixture and converting it to a homogeneous dispersion; the aqueous dispersion containing about 10 to 40 weight % of the polyolefin;

    b) introducing the dispersion into the upper portion of a column with at least 5 sieve plates therein; contacting it countercurrently with steam of about 90 to 120°C, the individual plates provided in the column having a free cross-sectional area which increases continuously from the lowermost to uppermost plate by about 3% up to 90% of the plate surface area, and being spaced apart from each other at approximately the same ratio from below to above; and

    c) removing, from the base portion of the column, an aqueous polyolefin dispersion free from hydrocarbons and separating the polyolefin from the water; and distilling off overhead a hydrocarbon/water-azeotrope or azeotropic mixture, condensing the azeotrope or azeotropic mixture in a condenser and separating it into its components in a separator downstream of the condenser.

2. Process as claimed in claim 1, wherein the residual hydrocarbons contain 6 to 11 carbon atoms.

3. Process as claimed in claim 1 or 2, wherein the residual hydrocarbons comprise hexane and gasoline.

4. Process as claimed in any of claims 1 to 3, wherein polyethylene or polypropylene is freed from residual hydrocarbons.

5. Process as claimed in any of claims 1 to 4, wherein the polyolefin contains 20 to 50 weight % of residual hydrocarbons.

6. Process as claimed in any of claims 1 to 5, wherein the aqueous emulsifier-containing solution has a surface tension at 20°C, with respect to air, of 61 to 68 mN/m.

7. Process as claimed in any of claims 1 to 6, wherein ethoxylated stearic acid is used as the emulsifier.

8. Process as claimed in any of claims 1 to 7, wherein the aqueous polyolefin dispersion is contacted countercurrently with steam under a pressure of 700 to 1600 millibars.

9. Process as claimed in any of claims 1 to 8, wherein the individual plates in the column are arranged so as to be spaced apart from each other at separations which increase from below to above, the two uppermost plates being spaced apart from one another at a separation which is about 10 times as large as the separation between the two lowermost plates.

10. Process as claimed in any of claims 1 to 9, wherein the dispersion is introduced into the upper portion of a column provided with 5 sieve plates without overflow, the individual plates having a free cross-sectional area equal to 5%, 10%, 20%, 60% and 70%, respectively, of the plate surface area and being spaced apart from below to above at separations equal to 5%, 15%, 30% and 50%, respectively, based on the overall length of the column.

11. Process as claimed in any of claims 1 to 10, wherein a temperature higher than the boiling point of the hydrocarbon/water-azeotrope to be separated is maintained near the head of the column.

12. Process as claimed in any of claims 1 to 11, wherein about 30 to 50 l/h of dispersion is introduced into the upper portion of the column.

## Revendications

1. Procédé pour l'élimination d'hydrocarbures résiduels liquides saturés, contenant au moins 5 atomes C dans leur molécule, de polyoléfines préparées en soumettant des $\alpha$-oléfines à une polymérisation catalytique en présence de catalyseurs mixtes classiques de composés de métaux lourds et de composés organométalliques, à l'aide de vapeur et d'eau, la teneur en hydrocarbures résiduels dans la polyoléfine étant de 10 à 50% en poids, ce procédé étant caractérisé en ce que:

    a) on introduit la polyoléfine contenant des hydrocarbures dans une solution aqueuse contenant un émulsionnant et présentant une tension superficielle à 20°C, par rapport à l'air, de 50—68 mN/m, on transforme le mélange par agitation en une dispersion homogène, la dispersion aqueuse contenant la polyoléfine en proportion de 10—40% en poids;

    b) on introduit la dispersion dans la partie supérieure d'une colonne à au moins 5 plateaux perforés, on la met en contact à contrecourant avec de la vapeur d'eau chauffée à 90—120°C, les plateaux individuels agencés dans la colonne présentant une section transversale libre qui croît en ·continu du plateau inférieur au plateau supérieur d'environ 3% jusqu'à 90% de la surface du plateau et à peu près dans le même rapport de bas en haut que la distance des plateaux individuels; et

    c) on évacue au fond de la colonne une dispersion aqueuse de polyoléfine exempte d'hydrocarbures et on sépare la polyoléfine de l'eau tandis qu'on distille, en tête de la colonne, un azéotrope hydrocarbure/eau ou un mélange azéotropique que l'on condense dans un réfrigérant et on le sépare en ses composants dans un séparateur placé à la suite.

2. Procédé selon la revendication 1, caractérisé en ce que les hydrocarbures résiduels présentent 6 à 11 atomes de carbone.

3. Procédé selon la revendication 1 ou 2, caractérisé en ce que les hydrocarbures résiduels sont l'hexane ou l'essence.

4. Procédé selon l'une quelconque des revendications 1 à 3, caractérisé en ce que l'on chasse les hydrocarbures résiduels du polyéthylène ou polypropylène.

5. Procédé selon l'une quelconque des revendications 1 à 4, caractérisé en ce que la polyoléfine présente une teneur en hydrocarbures résiduels de 20 à 50% en poids.

6. Procédé selon l'une quelconque des revendications 1 à 5, caractérisé en ce que la solution aqueuse contenant de l'émulsionnant présente une tension superficielle à 20°C, par rapport à l'air, de 61—68 mN/m.

7. Procédé selon l'une quelconque des revendications 1 à 6, caractérisé en ce qu'on utilise comme émulsionnant l'acide stéarique éthoxylé.

8. Procédé selon l'une quelconque des revendications 1 à 7, caractérisé en ce que l'on traite la dispersion aqueuse de polyoléfine en contrecourant par de la vapeur sous une pression de 700 à 1600 millibars.

9. Procédé selon l'une quelconque des revendications 1 à 8, caractérisé en ce que la séparation des plateaux individuels dans la colonne s'accroît de bas en haut de manière que la distance entre les deux plateaux en position extrême supérieure est environ 10 fois plus grande que la séparation entre les deux plateaux en position extrême inférieure.

10. Procédé selon l'une quelconque des revendications 1 à 9, caractérisé en ce que l'on introduit la dispersion dans la partie supérieure d'une colonne munie de 5 plateaux perforés sans trop-plein, les sections transversales libres des plateaux individuels étant égales à 5%, 10%, 20%, 60% et 70%, respectivement, de la surface du plateau et les plateaux individuels étant espacés les uns des autres de bas en haut à des distances égales à 5%, 15%, 30% et 50%, respectivement, de la longueur globale de la colonne.

11. Procédé selon l'une quelconque des revendications 1 à 10, caractérisé en ce qu'on maintient en tête de la colonne une température supérieure au point d'ébullition de l'azéotrope hydrocarbure/eau à séparer.

12. Procédé selon l'une quelconque des revendications 1 à 11, caractérisé en ce que l'on introduit la dispersion en tête de la colonne à raison d'environ 30—50 l/h.

**0 001 590**